## Europäisches Patentamt
## European Patent Office
## Office européen des brevets

(19)

(11) Numéro de publication: **0 174 881**
**B1**

(12)

# FASCICULE DE BREVET EUROPÉEN

(45) Date de publication du fascicule du brevet:
16.03.88

(51) Int. Cl.4: **A 01 B 15/06**

(21) Numéro de dépôt: **85401492.5**

(22) Date de dépôt: **19.07.85**

(54) Pointe de soc amovible pour charrue.

(30) Priorité: 14.09.84 FR 8414119

(43) Date de publication de la demande:
19.03.86 Bulletin 86/12

(45) Mention de la délivrance du brevet:
16.03.88 Bulletin 88/11

(84) Etats contractants désignés:
AT DE GB IT

(56) Documents cité:
DE-A-2 720 395
DE-C-518 971
FR-A-466 490
FR-A-1 563 778
FR-A-2 066 271
FR-A-2 427 763

(73) Titulaire: **Société de Constructions Mécaniques HUARD- UCF Société Anonyme, rue des Vauzelles, F-44110 Châteaubriant (FR)**

(72) Inventeur: **Diquero, Robert, 13, rue de Renac, F-44110 Chateaubriant (FR)**

(74) Mandataire: **Loyer, Bertrand, Cabinet Pierre Loyer 77, rue Boissière, F-75116 Paris (FR)**

EP 0 174 881 B1

## Description

L'invention concerne une pointe de soc amovible pour charrue, destinée à servir de pièce d'usure pour l'extrémité avant du soc afin de prolonger la duré de vie de celui-ci.

De telles pointes amovibles, que l'on fixe à l'extrémité avant du soc de charrue, existent depuis plusieurs années.

Le FR-A-2 086 271 décrit une telle pointe, réversible à deux tranchants que l'on retourne de 180° lorsque le premier tranchant employé est usé.

La déposante a elle-même créé une pointe amovible, non réversible pouvant prendre deux positions sur le soc. Lorsque, après utilisation, le tranchant est usé, la pièce peut être avancée vers l'extrémité avant du soc pour fournir une nouvelle longueur d'usure et un nouveau tranchant.

Ces types de pointes présentent l'inconvénient de constituer une surépaisseur, à l'extrémité avant du soc. Du fait de leur forme et de la surépaisseur ainsi réalisée, la protection latérale de l'aileron coutre et du contresep est mal assurée; le résultat est une usure irrégulière du contresep.

L'invention vise à pallier cet inconvénient en réalisant une pointe de soc réversible à deux tranchants, comportant sur chacun de ses bords et symétriquement par rapport à son centre, un renflement qui s'étend depuis le tranchant respectif jusque vers le milieu du bord de la pointe en s'épaississant et a une surface formant transition entre la surface supérieure plane de la pointe et sa surface inférieure, atténuant ainsi l'effet de surépaisseur sur le soc et protégeant latéralement le contresep afin d'en obtenir une usure plus lente et plus régulière.

Selon une réalisation avantageuse de l'invention la pointe est plus épaisse du côté du tranchant utilisé en second lieu que du côté du tranchant utilisé en premier lieu, afin de compenser l'usure subie pendant le labour avec le premier tranchant.

L'invention sera mieux comprise au moyen d'un exemple de réalisation représenté sur le dessin annexé sur lequel:

La figure 1 représente un corps de charrue dont le soc est équipé d'une pointe selon l'invention;

La figure 2 représente une pointe de soc amovible selon l'invention.

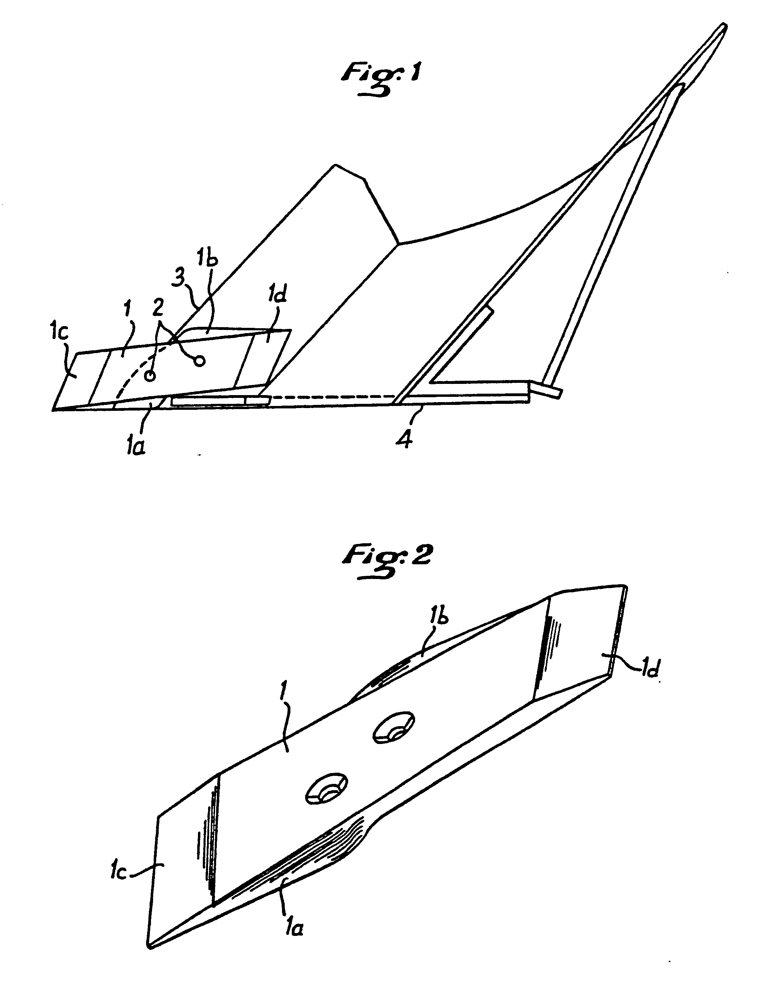

La pointe de soc 1 représentée sur la figure 2 comporte deux tranchants 1c et 1d destinés à être utilisés l'un après l'autre.

Sur un bord de la pointe 1, près du tranchant 1c, se trouve un renflement 1a qui s'étend entre le tranchant 1c et à peu près le milieu du bord de la pointe en s'épaississant. Le renflement 1a présente une surface qui fait la transition en pente douce, entre la surface supérieure de la pointe 1 et sa surface inférieure. Un renflement identique 1b est situé sur l'autre bord de la pointe, près du tranchant 1d, symétriquement par rapport au centre de la pointe.

Selon la figure 1, la pointe 1 est montée en biais à l'extrémité avant d'un soc de charrue 3 au moyen de vis 2, le tranchant 1c étant en position de travail. Le renflement 1a réalise d'une part la transition entre la surface supérieure de la pointe 1 et le soc 3 situé au-dessous et d'autre part un masquage du contresep 4.

Lors du labour, le renflement 1a atténue non seulement l'usure de la plaque de soc située au-dessous de lui mais protège le contresep 4 qui va ainsi avoir une usure plus lente et plus régulière.

Lorsque le tranchant 1c est usé, la pointe 1 est démontée, retournée de 180° puis remontée avec le tranchant 1d en position de travail et le renflement 1b remplira la même fonction que le renflement 1a précédemment.

Du fait que pendant le travail avec le tranchant 1c, la pointe 1 va subir une usure du côté du tranchant 1d, l'invention prévoit de réaliser la pointe avec une épaisseur plus forte du côté du tranchant 1d que du côté du tranchant 1c. Ainsi, lorsque le tranchant 1d sera utilisé, il aura, du fait de l'usure, la même épaisseur que le tranchant 1c.

La pointe de soc selon l'invention est avantageusement réalisée par estampage. Elle est légèrement vrillée pour respecter les angles caractéristiques de travail.

## Revendications

1. Pointe de soc amovible à deux tranchants (1c, 1d) destinée à être montée en biais sur l'extrémité avant d'un soc de charrue (3) et pouvant y être fixée dans deux positions décalées entre elles de 180°, caractérisée par le fait qu'elle comporte sur chacun de ses bords et symétriquement par rapport à son centre, un renflement (1a, 1b) qui s'étend depuis le tranchant respectif (1c, 1d) jusque vers le milieu du bord de la pointe en s'épaississant et a une surface formant transition entre la surface supérieure plane de la pointe et sa surface inférieure, atténuant ainsi l'effet de surépaisseur sur le soc (3) et protégeant latéralement le contresep (4) afin d'en obtenir une usure plus lente et plus régulière.

2. Pointe de soc amovible selon la revendication 1, caractérisée par le fait qu'elle est plus épaisse du côté du tranchant (1d) utilisé en second lieu que du côté du tranchant (1c) utilisé en premier lieu afin de compenser l'usure subie pendant le labour avec le premier tranchant.

3. Pointe de soc amovible selon l'une quelconque des revendications 1 et 2, caractérisée par le fait qu'elle est légèrement vrillée pour respecter les angles de travail caractéristiques.

4. Pointe de soc amovible selon l'une quelconque des revendications précédentes, caractérisée par le fait qu'elle est réalisée par estampage.

## Patentansprüche

1. Abnehmbare Pflugscharspitze mit zwei Schneiden (1c, 1d) zur schiefwinkeligen Montage auf dem vorderen Ende einer Pflugschar (3), wo sie in zwei, gegenseitig um 180° versetzten Stellungen befestigt werden kann, dadurch gekennzeichnet, daß sie auf jedem ihrer Ränder und symmetrisch zu ihrem Zentrum eine Anschwellung (1a, 1b) aufweist, welche sich von der bezüglichen Schneide (1c, 1d) bis zur Mitte des Randes der Spitze immer dicker werdend erstreckt und eine Oberfläche hat, die einen Übergang zwischen der oberen, ebenen Oberfläche der Spitze und ihrer unteren Oberfläche bildet und so die Wirkung der Überdicke auf die Schar abschwächt und seitlich die Anlage (4) schützt, um dadurch eine langsamere und regelmäßigere Abnützung zu erlangen.

2. Abnehmbare Pflugscharspitze nach Anspruch 1, dadurch gekennzeichnet, daß sie an der Seite der als zweite gebrauchten Schneide (1d) dicker ist als an der Seite der als erste gebrauchten Schneide (1c), um die während der Arbeit mit der ersten Schneide erlittene Abnützung zu kompensieren.

3. Abnehmbare Pflugscharspitze nach Anspruch 1 oder 2, dadurch gekennzeichnet, daß sie leicht verwunden ist, um den charakteristischen Arbeitswinkel zu berücksichtigen.

4. Abnehmbare Pflugscharspitze nach irgendeinem der vorhergehenden Ansprüche, dadurch gekennzeichnet, daß sie durch Gesenkschmieden hergestellt ist.

## Claims

1. A detachable ploughshare tip having two cutting edges (1c, 1d) adapted to be obliquely mounted on the forward end of a ploughshare (3) and capable of being fixed thereon in two positions mutually offset by 180°, characterised by the fact that it has on each of its edges and symmetrically with respect to its centre, a bulge (1a, 1b) which extends, and becomes thicker, from the respective cutting edge (1c, 1d) as far as about the middle of the edge of the tip and has a surface forming a transition between the upper flat surface of the tip and its lower surface, thus attenuating the effect of the additional thickness on the ploughshare (3) and laterally protecting the plough sole (4) in order to obtain slower and more even wear.

2. A detachable ploughshare tip according to Claim 1, characterised by the fact that it is thicker on the side of the cutting edge (1d), the second one to be used, than on the side of the cutting edge (1c) the first to be used, in order to compensate for the wear sustained during working with the first cutting edge.

3. A detachable ploughshare tip according to either of Claims 1 or 2, characterised by the fact that it is slightly twisted so as to respect the characteristic working angles.

4. A detachable ploughshare tip according to any one of the preceding claims, characterised by the fact that it is produced by stamping.

*Fig. 1*

1c  1  2  3  1b  1d

1a  4

*Fig. 2*

1b

1

1d

1c

1a